# EUROPEAN PATENT APPLICATION

(11) **EP 4 797 504 A1**
(43) Date of publication of application: **26.08.2026**
(21) Application number: 26157417.2
(22) Date of filing: 10.02.2026
(51) Int. Cl.: H02K 3/24, H02K 5/20, H02K 9/19

(54) **ELECTRIC MOTOR**

(30) Priority: 19.02.2025 JP 2025025255
(71) Applicant: Toyota Jidosha Kabushiki Kaisha, Toyota-shi, Aichi-ken 471-8571 (JP)
(72) Inventor: AWATA, Hideya, Toyota-shi, Aichi-ken, 471-8571 (JP); IZUMI, Masashi, Toyota-shi, Aichi-ken, 471-8571 (JP); OHIRA, Kengo, Toyota-shi, Aichi-ken, 471-8571 (JP); KAWAKAMI, Jun, Toyota-shi, Aichi-ken, 471-8571 (JP); NAITO, Shuma, Toyota-shi, Aichi-ken, 471-8571 (JP)
(74) Representative: TBK

(57) **Abstract**

An electric motor (100; 200) disclosed includes a cylindrical stator (3) and a ring-shaped refrigerant pipe (10). The ring-shaped refrigerant pipe (10) is disposed to be coaxial with the stator (3). The refrigerant pipe (10) has discharge ports (11) which face the stator (3) and from which refrigerant is discharged, and a refrigerant inlet (12; 212). The refrigerant inlet (12; 212) is positioned below the discharge ports (11).

## Description

### BACKGROUND OF THE INVENTION

### 1. Field of the Invention

The technology disclosed in the present specification relates to an electric motor.

### 2. Description of Related Art

In Japanese Unexamined Patent Application Publication No. 2012-005204 (JP 2012-005204 A), an electric motor that cools a stator by liquid refrigerant is disclosed. The refrigerant is stored in the bottom of a housing that houses a rotor and a stator. The electric motor includes a refrigerant pipe that guides the refrigerant at the bottom of the motor housing to an upper portion of the stator, and a pump. The refrigerant accumulated in the bottom of the housing is transmitted to the upper portion of the stator through the refrigerant pipe by the pump, and the refrigerant falls onto the stator from a distal end of the refrigerant pipe.

### SUMMARY OF THE INVENTION

When a ring-shaped refrigerant pipe is employed, there is a fear that the refrigerant may remain accumulated in a place below a discharge port from which the refrigerant is discharged. For example, when a refrigerant inlet is disposed in an uppermost portion of the refrigerant pipe, refrigerant that is newly supplied to the refrigerant pipe is discharged from the discharge port, but there is a fear that old refrigerant may indefinitely stay in a place below the discharge port. The present disclosure relates to an electric motor that employs a ring-shaped refrigerant pipe and suppresses refrigerant from staying in a refrigerant pipe.

An electric motor according to an aspect of the present disclosure includes a cylindrical stator and a ring-shaped refrigerant pipe. The ring-shaped refrigerant pipe is disposed to be coaxial with the stator. The refrigerant pipe has a discharge port which faces the stator and from which refrigerant is discharged, and a refrigerant inlet. The refrigerant inlet is positioned in a place below the discharge port.

In other words, the refrigerant inlet is disposed in a lower position than the refrigerant discharge port. By this arrangement, the refrigerant that has entered from the refrigerant inlet flows in both directions of the ring until the refrigerant reaches a lowermost discharge port. Therefore, the refrigerant accumulated in a lowermost portion of the ring-shaped refrigerant pipe is also pushed up by new refrigerant and eventually flows out from the discharge port. A refrigerant supplying port may be provided in a lowermost portion of the refrigerant pipe. When the refrigerant pipe has a plurality of discharge ports, the refrigerant inlet is positioned in a place below all of the discharge ports.

In the electric motor according to the aspect of the present disclosure may include a housing that houses the stator. The refrigerant pipe may be supported by a housing at least at three places.

In the electric motor according to the aspect of the present disclosure, the three support sections may be disposed to be linearly symmetrical about a vertical line that passes through a center of the refrigerant pipe in a case where seen along an axial line of the refrigerant pipe.

The electric motor may vibrate. By employing the structure described above, the ring-shaped refrigerant pipe becomes stronger against vibration.

In the electric motor according to the aspect of the present disclosure, the refrigerant inlet may protrude from the refrigerant pipe and be fitted in a hole provided in the housing.

In other words, the refrigerant inlet coincides with the support section of the refrigerant pipe. In other words, a cooling inlet also serves as the support section of the refrigerant pipe. By this structure, the place around the refrigerant inlet becomes resilient to vibration, and the risk of refrigerant leakage can be reduced even when the electric motor vibrates.

In the electric motor according to the aspect of the present disclosure, two refrigerant pipes having the same shape may be each disposed on a corresponding one of ends of the stator in the axial line direction of the stator.

By employing a plurality of refrigerant pipes having the same shape, the cost of the electric motor can be reduced.

In the electric motor according to the aspect of the present disclosure, a bearing cylinder on which a bearing configured to rotatably support a rotor is mounted may be provided on a reverse surface of the housing, and the refrigerant pipe may be disposed between the bearing cylinder and the stator.

In the electric motor according to the aspect of the present disclosure, a bearing cylinder on which a bearing configured to rotatably support a rotor is mounted may be provided on an inner surface of the housing, the stator may include a coil end, and the refrigerant pipe may be disposed in a linear form perpendicular to the bearing cylinder, the coil end, and an axial line of the stator.

A space between the bearing cylinder and the stator has originally been a dead space. The refrigerant pipe effectively utilizes the dead space.

Details and further improvements of the technology disclosed in the present specification are described in "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view of an electric motor of an embodiment;
FIG. 2 is a front view of a refrigerant pipe supported by a housing cover; and
FIG. 3 is a front view of a refrigerant pipe supported by a housing cover (modified example).

### DETAILED DESCRIPTION OF EMBODIMENTS

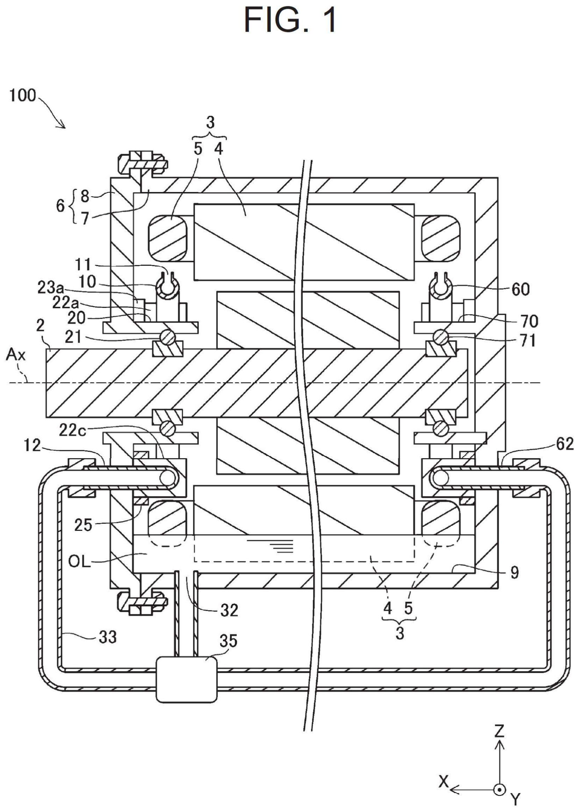

An electric motor 100 of an embodiment is described with reference to the drawings. An "electric motor" is referred to as a "motor" below for explanatory convenience. A sectional view of the motor 100 is shown in FIG. 1. A Z-axis in a coordinate system in the drawings coincides with the vertical direction, and a plane (XY-plane) spanned by an X-axis and a Y-axis coincides with a horizontal plane. Here, the +Z-direction coincides with the upper side in the vertical direction. The motor 100 uses liquid refrigerant. In general, in a motor using liquid refrigerant, the posture at the time of use is specified in order to secure the circulation of the refrigerant. In the motor 100, regarding the posture at the time of use, an axial line Ax of a cylindrical stator 3 extends in the horizontal direction, the bottom of a housing 6 that houses the stator 3 and a rotor 2 is a refrigerant storage portion 9, and the refrigerant storage portion 9 is defined to be positioned vertically below the stator 3. FIG. 1 shows a section of the motor 100 cut at a vertical plane that passes through the axial line Ax. In FIG. 1, the illustration of the central part of the motor 100 in the direction of the axial line Ax is omitted.

The motor 100 includes a rotor 2 and a stator 3. The rotor 2 has a circular column shape, and the stator 3 has a cylindrical shape. The rotor 2 is disposed to be coaxial with the cylindrical stator 3. The line Ax in the drawings represents an axial line of the rotor 2 and the stator 3.

The stator 3 includes a stator core 4 and coil ends 5. A plurality of coils is wound around the stator core 4, and both ends of the coil in the direction of the axial line Ax are equivalent to the coil ends 5. The stator 3 includes a plurality of coil ends 5, but the illustration of some coil ends is omitted in FIG. 1.

The rotor 2 and the stator 3 are housed in the housing 6. The housing 6 is configured by a bottomed cylindrical housing main body 7 and a housing cover 8 that closes an opening in the housing main body 7. The housing main body 7 and the housing cover 8 are fastened by a plurality of bolts. The stator 3 is fixed to the housing main body 7.

The rotor 2 is rotatably supported by the housing 6 via a bearing 21. A cylindrical bearing cylinder 20 is provided to be coaxial with the axial line Ax on a reverse surface of the housing cover 8 (an inner surface of the housing cover 8), and the bearing 21 is disposed between the inner periphery of the bearing cylinder 20 and the outer periphery of the rotor 2. The rotor 2 is rotatably supported by the housing 6 via the bearing 21. The bearing cylinder 20 also opens to the outer side of the housing 6, and a main shaft of the rotor 2 extends to the outside through the bearing cylinder 20. A bearing cylinder 70 is also provided in the housing main body 7, and a bearing 71 is disposed between the inner periphery of the bearing cylinder 70 and the outer periphery of the rotor 2. The rotor 2 is rotatably supported by the housing 6 via the bearings 21, 71.

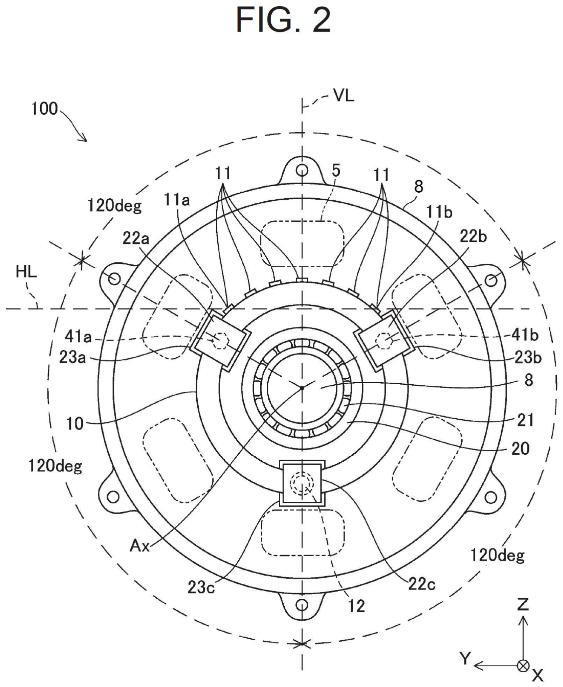

The motor 100 cools the stator 3 (coil ends 5) by a liquid refrigerant. The refrigerant may typically be oil. A ring-shaped refrigerant pipe 10 is disposed in the housing 6. In FIG. 2, a front view of the refrigerant pipe 10 fixed to the housing cover 8 is shown. FIG. 2 is a view seen from a direction along the axial line Ax. In FIG. 2, the coil ends 5 are illustrated by virtual lines. The coil ends 5 are arranged in a circumferential direction about the axial line Ax.

The ring-shaped refrigerant pipe 10 is disposed to be coaxial with the axial line Ax of the stator 3 and on the inner side of the stator 3. In more detail, the refrigerant pipe 10 is disposed on the inner side of the coil ends 5 arranged in the circumferential direction about the axial line Ax.

A plurality of refrigerant discharge ports 11 is provided in an upper portion of the refrigerant pipe 10. The refrigerant discharge ports 11 face the stator 3 (coil ends 5). The refrigerant discharge ports 11 are arranged along the circumferential direction on the outer periphery side of the ring-shaped refrigerant pipe 10. The refrigerant discharge ports 11 discharge the refrigerant toward the coil ends 5 positioned on the outer periphery side of the refrigerant pipe 10. A bottom portion of the housing 6 in the vertical direction thereof is the refrigerant storage portion 9, and the refrigerant (oil OL) in the refrigerant storage portion 9 is transmitted to the refrigerant pipe 10 by a pump 35 and is discharged from the refrigerant discharge ports 11.

The refrigerant pipe 10 includes a refrigerant inlet 12 in a lowermost portion in the vertical direction. The refrigerant inlet 12 protrudes from the refrigerant pipe 10 along the axial line Ax of the stator 3 and passes through the housing cover 8. One end of a refrigerant transport pipe 33 is connected to the refrigerant inlet 12. The other end of the refrigerant transport pipe 33 is connected to a drain hole 32 provided at the bottom of the refrigerant storage portion 9. The pump 35 is mounted on the refrigerant transport pipe 33. As described above, the pump 35 pushes the refrigerant (oil OL) accumulated in the refrigerant storage portion 9 up to the refrigerant pipe 10. By the pressure of the pump 35, the refrigerant in the refrigerant pipe 10 is discharged toward the stator 3 (coil ends 5) from the refrigerant discharge ports 11.

The refrigerant discharge ports 11 are only provided in the upper portion (upper half) of the refrigerant pipe 10, and the refrigerant discharged from the refrigerant discharge ports 11 reaches an upper portion of the stator 3 (the coil ends 5 positioned on the upper side in the vertical direction). The refrigerant falls from the coil ends 5 on the upper side in the vertical direction to the coil ends 5 on the lower side in the vertical direction by gravity. The refrigerant spreads to all of the coil ends 5 as above. In other words, the refrigerant spreads to the whole circumference of the cylindrical stator 3.

The refrigerant discharge ports 11 are positioned above a horizontal line HL (see FIG. 2). The refrigerant inlet 12 is positioned below all of the refrigerant discharge ports 11 in the vertical direction. An advantage of this structure is described. When the pump 35 is stopped, the water level of the refrigerant drops to the refrigerant inlet 12 in the refrigerant pipe 10 by the action of the gravity. When the pump 35 is activated again and the refrigerant starts to be supplied through the refrigerant inlet 12, the water level of the refrigerant rises on both sides of the refrigerant inlet 12. In other words, the refrigerant in the refrigerant pipe 10 flows to both sides of the refrigerant inlet 12 and is discharged from the refrigerant discharge ports 11. When seen along the axial line Ax, lowermost refrigerant discharge ports at the same height in the vertical direction exist on both sides of a vertical line VL that passes through the axial line Ax (refrigerant discharge ports 11a, 11b in FIG. 2). When the pump 35 is activated again, the water level of the refrigerant increases, and the refrigerant is discharged from the lowermost refrigerant discharge ports 11a, 11b. When the pressure of the pump 35 further increases, the water level further increases, and the refrigerant is also discharged from the refrigerant discharge ports 11 above the lowermost refrigerant discharge ports 11a, 11b.

When the refrigerant discharge ports 11 are positioned below the refrigerant inlet 12, the water level of the refrigerant drops to the lowest refrigerant discharge ports 11 in the refrigerant pipe 10 when the pump 35 is stopped. Even when the pump 35 is activated again, the refrigerant below the lowermost refrigerant discharge ports 11 in the refrigerant pipe 10 does not flow to the refrigerant discharge ports 11. In this case, there is a fear that the refrigerant may continue to stay in a lower portion of the refrigerant pipe 10. As described above, in the motor 100 of the embodiment, the refrigerant inlet 12 is positioned below all of the refrigerant discharge ports 11, and hence the refrigerant does not continue to stay in the refrigerant pipe 10.

A fixing structure of the refrigerant pipe 10 is described. Support blocks 22a, 22b, 22c are mounted on three places in the refrigerant pipe 10. The support block 22a (22b) is fitted in a support frame 23a (23b) provided on the reverse surface of the housing cover 8 and is fixed to the housing cover 8 by bolts 41a (41b).

The support block 22c is integrated with the refrigerant inlet 12 that protrudes from the refrigerant pipe 10 and is fitted in a support frame 23c provided on the reverse surface of the housing cover 8. As described above, the refrigerant inlet 12 has a tubular shape, and the tube passes through the housing cover 8. In other words, the refrigerant inlet 12 is fitted in a hole in the housing cover 8, and the refrigerant pipe 10 is fixed to the housing cover 8 by this fitting. Three places in the refrigerant pipe 10 are supported by the housing cover 8 by the three support blocks 22a to 22c. As shown in FIG. 2, the three support sections (support blocks 22a to 22c) are disposed to be linearly symmetrical with the vertical line VL that passes through the axial line Ax when seen along the axial line Ax. The three support sections (support blocks 22a to 22c) are disposed at an interval of 120 degrees along the peripheral direction when seen along the axial line Ax. There is a fear that the motor 100 may vibrate at the time of driving, but the arrangement of the three support sections reduces the vibration of the refrigerant pipe 10. As described above, two (the support blocks 22a, 22b) of the three support sections (support blocks 22a to 22c) are fixed to the housing cover 8 by the bolts 41a, 41b. The remaining one place (the support block 22c) is supported by the housing cover 8 as a result of the tubular refrigerant inlet 12 integrated in the support block 22c being fitted in the hole in the housing cover 8.

### Modified Example

The motor 100 includes another refrigerant pipe 60 having the same shape as the refrigerant pipe 10. The refrigerant pipe 10 is positioned on one end of the stator 3 along the axial line Ax, and the refrigerant pipe 60 is positioned on the other end. The refrigerant pipe 60 has the same shape and the same structure as the refrigerant pipe 10, and the fixing structure with respect to the housing 6 is also the same as that of the refrigerant pipe 10. The motor 100 can reduce the manufacturing cost by employing the refrigerant pipes 10, 60 having the same shape.

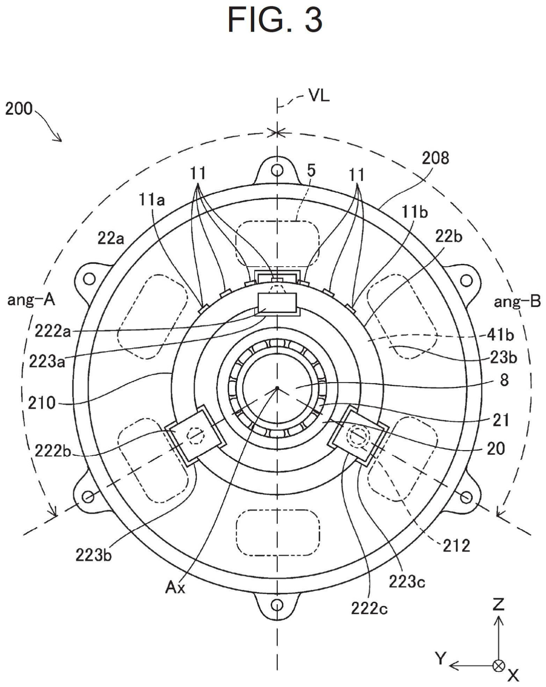

In FIG. 3, a motor 200 of a modified example is shown. The motor 200 of the modified example has a ring-shaped refrigerant pipe 210, and the refrigerant pipe 210 is supported by a housing cover 208 (housing 206). FIG. 3 is a view of the refrigerant pipe 210 supported by the housing cover 208 taken along the axial line Ax.

In the motor 200, the position of a refrigerant inlet 212 and the positions of support blocks 222a, 222b, 222c are different from the motor 100. Other than the above, the structure and the features of the motor 200 are the same as those of the motor 100.

The refrigerant pipe 210 is supported by the housing cover 208 at three places. The housing cover 208 is a part of the housing 206 of the motor 200. Three support blocks 222a, 222b, 222c are mounted on the refrigerant pipe 210. The support block 222a (222b) is fitted in a support frame 223a (223b) provided on a reverse surface of the housing cover 208 and is fixed to the housing cover 208 by bolts. The support block 222c is integrated with the refrigerant inlet 12 that protrudes from the refrigerant pipe 210 and is fitted in a support frame 223c provided on the reverse surface of the housing cover 208. The refrigerant inlet 212 passes through the housing cover 208 and extends to the outside of the housing 206. In other words, the refrigerant inlet 212 is fitted in a hole in the housing cover 208, and the refrigerant pipe 210 is fixed to the housing cover 208 by this fitting. The refrigerant pipe 210 is supported by the housing cover 208 at three places by the three support blocks 222a to 222c.

The support block 222a is positioned in an uppermost portion of the ring-shaped refrigerant pipe 210 and overlaps with the vertical line VL that passes through the axial line Ax when seen along the axial line Ax. The support blocks 222a to 222c are disposed on a circumference about the axial line Ax when seen along the axial line Ax. A sector angle ang-A between the support block 222a and the support block 222b in the uppermost portion and a sector angle ang-B between the support block 222a and the support block 222c in the uppermost portion are equal when seen along the axial line Ax. In other words, as shown in FIG. 3, the three support sections (support blocks 222a to 222c) are disposed to be linearly symmetrical with the vertical line VL that passes through the axial line Ax when seen along the axial line Ax. The sector angle ang-A (= ang-B) is not limited but is preferably 90 degrees or more and is most preferably 120 degrees. The motor 200 vibrates at the time of driving, but the arrangement of the three support sections reduces the vibration of the refrigerant pipe 210.

The refrigerant inlet 212 is positioned in a place higher than a lowermost portion of the refrigerant pipe 210. When the pump 35 is stopped, the water level of the refrigerant drops to the refrigerant inlet 212. When the pump is activated again, the water level of the refrigerant rises on both sides of the vertical line VL (the vertical line that passes through the axial line Ax) when seen along the axial line Ax. The refrigerant is discharged from the lowermost refrigerant discharge ports 11a, 11b positioned on both sides of the vertical line VL. When the pressure of the pump 35 increases, the water level of the refrigerant further rises, and the refrigerant is also discharged from the refrigerant discharge ports 11 above the lowermost refrigerant discharge ports 11a, 11b. The refrigerant does not continue to stagnate in the ring-shaped refrigerant pipe 210 on the lower side thereof.

Attention points relevant to the technology described in the embodiments will be listed. The number of the refrigerant discharge ports 11 included in the refrigerant pipe 10 (210) is not limited. The refrigerant pipe only needs to have at least one refrigerant discharge port. However, when seen from the direction along the axial line Ax, the refrigerant discharge ports 11 are preferably provided on both sides of the vertical line VL that passes through the axial line Ax, and the heights of the lowermost refrigerant discharge ports that are the lowest in the vertical direction are preferably the same on both sides of the vertical line VL (the refrigerant discharge ports 11a, 11b in FIG. 2).

Each of the ring-shaped refrigerant pipes 10, 210 is disposed between the stator 3 and the bearing cylinder 20 that protrudes to the inner side from the housing cover 8. Each of the refrigerant pipes 10, 210 is positioned between the bearing cylinder 20 and the stator 3 when seen from the direction along the axial line Ax as well as a direction orthogonal to the axial line Ax (FIG. 1). The bearing cylinder 20 is coaxial with the rotor 2 and the stator 3, and a space between the bearing cylinder 20 and the stator 3 has originally been a dead space. The refrigerant pipe 10 effectively uses the dead space.

The lowermost refrigerant discharge ports at the same height in the vertical direction exist on both sides of the vertical line VL that passes through the axial line Ax when seen along the axial line Ax (the refrigerant discharge ports 11a, 11b in FIG. 2). The refrigerant inlet 12 is positioned in a lower section than the lowermost refrigerant discharge ports 11a, 11b. When the pump 35 is activated again, the water level of the refrigerant increases on both sides of the vertical line VL, and the refrigerant is discharged from the lowermost refrigerant discharge ports 11a, 11b. As shown in FIG. 3, the same applies to a case in which the refrigerant inlet 212 is disposed in a position higher than the lowermost position of the refrigerant pipe 210. Therefore, the refrigerant does not continue to stay in the refrigerant pipes 10, 210.

The specific examples of the present invention have been described above in detail. The specific examples of the present invention are just examples, and do not limit the claims. A technology as disclosed in the claims includes various modifications and alterations of the specific embodiments illustrated above. Technical elements described in the present specification or the drawings exert technical utility independently or by various combinations, and are not limited to the combinations described in the claims at the time of the filing. Further, the technology exemplified in the present specification or the drawings can concurrently achieve a plurality of purposes, and has technical utility simply by achieving one purpose of the plurality of purposes.

## Claims

1. An electric motor (100; 200) comprising:
a cylindrical stator (3); and
a ring-shaped refrigerant pipe (10) that is disposed to be coaxial with the stator (3), has a discharge port (11) which faces the stator (3) and from which refrigerant is discharged, and has a refrigerant inlet (12; 212), wherein the refrigerant inlet (12; 212) is positioned below the discharge port (11).

2. The electric motor (100; 200) according to claim 1, further comprising a housing (6; 206) that houses the stator (3), wherein the refrigerant pipe (10) is supported by the housing (6; 206) at least at three places.

3. The electric motor (100; 200) according to claim 2, wherein the three support sections are disposed to be linearly symmetrical about a vertical line that passes through a center of the refrigerant pipe (10) in a case where seen along an axial line of the refrigerant pipe (10).

4. The electric motor (100; 200) according to any one of claims 2 to 3, wherein the refrigerant inlet (12; 212) protrudes from the refrigerant pipe (10) and is fitted in a hole provided in the housing (6; 206).

5. The electric motor (100; 200) according to claim 1, wherein two of the refrigerant pipes (10) having a same shape are each disposed on a corresponding one of ends of the stator (3) in an axial line direction of the stator (3).

6. The electric motor (100; 200) according to claim 2, wherein:
a bearing cylinder (20) on which a bearing (21) configured to rotatably support a rotor is mounted is provided on a reverse surface of the housing (6; 206); and
the refrigerant pipe (10) is disposed between the bearing cylinder (20) and the stator (3).

7. The electric motor (100; 200) according to claim 2, wherein:
a bearing cylinder (20) on which a bearing (21) configured to rotatably support a rotor is mounted is provided on an inner surface of the housing (6; 206);
the stator (3) includes a coil end (5); and
the refrigerant pipe (10) is disposed in a linear form perpendicular to the bearing cylinder (20), the coil end (5), and an axial line (Ax) of the stator (3).
